(19) Europäisches Patentamt
European Patent Office
Office européen des brevets

(11) EP 3 388 462 A1

(12) EUROPEAN PATENT APPLICATION

(43) Date of publication:
**17.10.2018 Bulletin 2018/42**

(21) Application number: **17166257.0**

(22) Date of filing: **12.04.2017**

(51) Int Cl.:
*C08G 18/77* (2006.01) *C08G 18/79* (2006.01)
*C08G 18/38* (2006.01) *C08G 18/42* (2006.01)
*C09D 175/06* (2006.01) *C08G 18/72* (2006.01)
*C08G 18/80* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **TIGER Coatings GmbH & Co. KG**
**4600 Wels (AT)**

(72) Inventors:
- **NGUYEN, Le Huong**
**4600 Wels (AT)**
- **HERZHOFF, Carsten**
**4600 Wels (AT)**
- **LEMESANSZKINE-PISZKOR, Nikoletta**
**4600 Wels (AT)**

(74) Representative: **Sonn & Partner Patentanwälte**
**Riemergasse 14**
**1010 Wien (AT)**

(54) **POWDER COATING COMPOSITION**

(57) The present invention relates to a powder coating composition comprising:
a. at least one component (A) comprising thermo-reversible (S-S) bonds and functional groups capable of reacting with an amorphous polymer binder (B) and/or at least one component (a1) comprising thermo-reversible (S-S) bonds and at least one component (a2) capable of reacting with (a1) to form component (A),
b. at least one amorphous polymer binder (B) with a Tg > 30 °C comprising functional groups capable of reacting with the functional groups of component (A) and
c. at least one (semi)crystalline component (C), preferably a polymer, with a melting point above or equal to 40 °C with functional groups capable of reacting with the functional groups of component (A) and/or the functional groups of the amorphous polymer binder (B).

EP 3 388 462 A1

## Description

The present invention relates to the field of coatings, in particular involving powder coatings, and is particularly directed to the development of polymeric materials and formulations and a suitable process for producing powder coatings with self-healing characteristics.

There are two main approaches known for producing self-healing polymer materials, extrinsic self-healing and intrinsic self-healing [Ref.1].

In extrinsic healing, hollow fibers or capsules filled with healing agents and catalysts are encapsulated in polymer composite materials. The capsules rupture on damage of polymer composite, and healing agent is delivered, which fills the crack and is cured in presence of catalyst and heals the composite materials. The major issue with this approach is that it works only once and cannot heal any further damage after the capsules or hollow fibers are fractured and the curing agent is used.

Intrinsic self-healing polymers are materials capable of repairing molecular and macroscale damages via a temporary local increase in mobility of the polymeric chains. Intrinsic healing involves extensive chemical modification of polymer chains of polymer composite which completely change various properties such as adhesion and mechanical properties, etc. A well-known concept of this approach is utilizing the chemistries of reversible covalent bonds, with reversible forming and breaking of covalent bonds [Ref. 1-2]. The idea behind it is to reconnect the chemical crosslinks which are broken upon damages via reversible or exchangeable bonds present in the polymer network. Intrinsic self-healing coatings are not able to heal large cracks, and are effective for ultrafine cracks, which is a major drawback.

There are many publications and patents with many different approaches and concepts for self-healing materials (coatings), but mainly for liquid coatings except only few patents found for powder coatings.

US 8460793 B2 and US 7723405 B2 disclose the self-healing coating using extrinsic capsule approach. CN 105038502 A discloses self-healing epoxy powdery coating containing microcapsule consists of specified amount of microcrack self-healing capsule, Grubbs catalyst and epoxy powder and/or polyester resin. In this concept the microcapsule is ruptured during cracking, and dicyclopentadiene rapidly penetrates and reacts with catalyst to enable crosslinking and repair.

CN 103254736 A relates to self-healing anticorrosive coating, a kind of one with bear acid automatic repairing function of polyaniline epoxy based powder coating. US 2015/0184304A1 provides self-healing anticorrosive coating comprising composites of conducting polymers, chitosan, silica particles along with epoxy.

The group of TNO Science and Industry, Eindhoven (NL) [Ref.3] published a paper about the remendable coating concept for epoxy powder coating via Diels-Alder reversible bonding as an intrinsic approach. The coating formulations were prepared by mixing the synthesized epoxy functional Diels-Alder adduct with different commercial amines. However the concept based on Diels-Alder reversible bonding usually requires high temperature stimulations and long time healing process. Furthermore particularly regarding to the powder coating applications, Diels-Alder route requires a lot of synthesis to obtain Diels-Alder adducts (containing furan - maleimide linkage) as polymer binders and/or crosslinkers for powder coatings compositions. Additionally these materials must fulfil several requirements for powder coating raw materials such as: in powder form with Tg between 50-70°C which limit its applications for powder coating industry.

Therefore, in order to achieve a reversible covalent self-healing material which is autonomous or needs weak stimulations and rapid healing, an appropriate choice of this covalent bond is a key feature. In this sense disulfide bonds appear as good candidates to introduce a healing functionality at low temperature [Ref 1-2]. J. Mater. Chem., 2008, 18, 41-62 "Mendable polymers" (Sheba D. Bergmana and Fred Wudl), Macromolecules 2011, 44, 2536-2541,WO 2010/128007 A1, and WO2015127981 disclose the use of disulfide metathesis, disulfide reversible bonding for self -healing mendable materials, particularly for elastomer materials which possess low glass transition temperature (Tg).

Self-healing powder coatings feature two important differences from polymeric bulk materials and from liquid coatings. Surface coatings have only a limited volume in comparison with a polymeric bulk material. The second issue is powder coatings require high temperature of curing between 130-200°C in comparison with liquid coatings. Furthermore powder coatings have quite high Tg. Therefore a suitable concept for powder coatings is more critical.

Disadvantages of capsule concept are only one time of repairing, high cost due to the capsule preparation technology, high cost of the encapsulated catalyst, the size of capsule in relation with the thickness of coatings, the stability of capsule during extrusion of powder coating process etc. While intrinsic self-healing coatings are not able to heal large cracks, and effective for only ultrafine cracks, which is a major drawback. Therefore it is a continuous need to find the right concept for self-healing powder coating, especially suitable for industry aspects with easy process, material availability and effective self-healing performance.

The aim of the present invention is to overcome the disadvantages of the state of the art. There is a need for powder coating composition based on criteria of cheap, fast to market, sufficiently healing with many cycles, for big cracks, suitability and availability of raw materials for powder coating formulations and were as for a process, easy to do, with only minor changes compared to the conventional process of powder coatings.

The present invention relates to the development of thermoset powder coating compositions with self-healing performance, the subsequent restoration of functions such as aesthetics and corrosion protection. The present invention provides the formulations, compositions and process of preparing self healable polyurethane (PU) powder coatings.

Therefore, according to the present invention a powder coating composition is provided, comprising:

a. at least one component (A) comprising thermo-reversible (S-S) bonds and functional groups capable of reacting with an amorphous polymer binder (B) and/or at least one component (a1) comprising thermo-reversible (S-S) bonds and at least one component (a2) capable of reacting with (a1) to form component (A),
b. at least one amorphous polymer binder (B) with a Tg > 30 °C comprising functional groups capable of reacting with the functional groups of component (A) and
c. at least one (semi)crystalline component (C), preferably a polymer, with a melting point above or equal to 40 °C with functional groups capable of reacting with the functional groups of component (A) and/or the functional groups of the amorphous polymer binder (B).

According to a preferred embodiment of the present invention, the self-healing powder coating composition is characterized in that the functional groups of component (A) are -NCO groups and the functional groups of the (semi)crystalline component (C) and the functional groups of the amorphous polymer binder (B) are each -OH groups. Furthermore, according to the present invention, in the powder coating composition component (a1) preferably has free -NH2 groups.

It is also preferred, if the weight ratio of the amorphous polymer binder (B) to the (semi)crystalline component (C) is between 95/5 and 50/50, preferably 80/20 to 60/40.

According to yet another preferred embodiment, the molar ratio of component (a2) to component (a1) is between 5/1 and 1,5/1, preferably between 2,5/1 and 1,5/1.

In connection therewith, it is also preferred if the molar ratio of the functional groups of component (A) divided by the sum of the functional groups of the (semi)crystalline component (C) and the functional groups of the amorphous polymer binder (B) is between 1 and 1,5, preferably between 1,1 and 1,3.

Furthermore, it is preferable if the amorphous polymer binder (B) and the (semi)crystalline component (C) are each polyesters.

In yet another embodiment of the present invention it has been found that the amorphous polymer binder (B) preferably has a OH-value below 100, preferably below 50 mg KOH/g.

It is also preferred if the (semi)crystalline component (C) is polycaprolactone (PCL).

According to the present invention it is preferred if PCL has a MW of higher than 2000 g/mol, preferably a MW of between 4000 and 8000 g/mol and an OH-value of higher than 10 mgKOH/g.

Preferably the (semi)crystalline component (C) has a melting point of between 50 and 120 °C and a MW of between 3000 to 15000 g/mol, preferably 8000 to 15000 g/mol.

In connection therewith it has been found that it is preferred if the coating composition according to the present invention additionally comprises at least one curing agent/crosslinker for (B) and (C) which preferably is based on a member of the group consisting of blocked polyisocyanates, uretdiones, mixtures thereof and latent polyisocyanates with a functionality of at least 2 and preferably is present in an amount of 0.5 to 50 % by weight of the total powder coating composition.

According to a preferred embodiment the (semi)crystalline component (C) is present in an amount of 0.5 to 30 % by weight of the total composition.

It also is preferred if component (A) is or comprises an aromatic disulfide, preferably a diphenyl disulfide, which even more preferably is selected from the group consisting of 4,4'-diaminodiphenyl disulfide, 2,2'-diaminodiphenyl disulfide, a mixture thereof; and 4,4'-ethylenedianiline.

According to the present invention a self-healing coating obtained from the above mentioned powder coating composition is provided in which the final coating after curing and/or self-healing has a Tg of at least 40 °C.

The present invention overcomes the challenges of previous self-healing coating technology, particularly for powder coating, by utilizing the combination concept via reversible bonding disulfide S-S and with shape memory assisted. The technology not only heals fine scratches but also deep cracks as well. Other advantages include multiple healings, maintaining high gloss by restoring high initial gloss values upon self-healing, commercial viability due to the easy process of producing it. The coatings of the present invention show that it is able to heal also the big scratch when heat was applied in short time (from minutes to less than 2 hours when heat is applied between 80 °C to 150 °C).

The inventive coatings also possess the urea linkages in the polymer network contributing to the self-healing effect via dynamic reversible urea bonding and additionally offering improved physical and mechanical properties for powder coatings. Furthermore the use of functional PCL in powder coating composition is also a novelty approach contributing to the improved flexibility of the coatings.

Generally, the present invention is using shape memory polymer together with reversible disulfide (S-S) bridge containing polymers either as polymer binder or crosslinker in the powder coating compositions to create a self-healing

polymer coating network.

Shape memory polymers refer to a group of materials that demonstrate the ability to return to some previous defined shape or size when subjected to an appropriate external stimulus such as temperature, magnetic field or electromagnetic radiations.

The big cracks cannot be brought into contact manually; therefore the shape memory effect utilized to bring the fractured matrix into contact before the self-healing scheme takes effect. Although the damaged shape memory coating can recover its original shape at activating temperatures, the lack of a chemical reaction between the two edges of the defect limits the efficiency of the healing process. Thus, necessarily further healing occurred via reversible bond formation under heat after thermal shape memory activation.

Thermoplastic shape memory material becomes liquid like above its glass transition (Tg) or melting temperature (Tm) creating an increase in mobility, and as a result of the entropy elasticity the material returns to its primary shape. This property can be utilized for self-healing purposes [Ref.4]. However, a thermoplastic material loses its strength and integrity above its Tg or Tm. The coating cannot simultaneously possess the property of free flowing in order to self -heal and the property of withstanding its hardness. For powder coatings usually the hardness that is a top priority. Because of the hardness concern, and to be able to introduce the shape memory performance, in the present invention functional shape memory material, particularly hydroxyl terminated shape memory polymer is incorporated covalently in the polymer polyurethane coating network via chemically crosslinking with other functional components. Consequently it improves the mobility of the coating network when it is heated above Tm, therefore bringing the cleavage S-S chain near to each other assisting the revisable bond formations/ exchange reaction takes place easier leading to an effective reformation of the polymer coating network.

Powder coatings after curing usually have a high Tg. The high Tg phase will provide the strength and stability while the temporary low Tg phase upon heat under shape memory effect will have enough mobility to heal the microcracks when needed.

Polycaprolactone (PCL) can preferably be used as switching segment for shape memory purposes due to its semi-crystalline behaviour with a melting point around 60 °C and its low Tg of -60 °C. Even more preferred, polyurethane powder coatings created by reaction between polyisocyanate with hydroxyl functional polyester binder, and with functional polycaprolactone as shape memory polymer, form the coating network. PCL in its diol form is preferred. The use of this diol PCL can not only assist the self-healing process but also improve the toughness and flexibility of the coatings, which are usually quite brittle.

The self-healing is achieved by introducing disulfide (S-S) groups in the network that are able to exchange [scheme 1], leading to renewal of cross-links across the damaged surfaces [Ref.1, 2, 5, 6]. For reversible weak covalent interaction, disulfide bonds impart the healing functionality through dynamic exchange of disulfide reaction at low temperature with relative strong bonds. Among others, diphenyl disulfide based compounds appear to be among the best candidates to develop materials with optimum self-healing properties [Ref.2].

Due to the dynamics and reversibility of the S-S bond cleavage (to generate sulfenyl radicals), disulfide compounds play a crucial role in self-healing technology where the exchange of disulfide groups is responsible for the observed self-healing properties. [Ref.5]

In Scheme 1 the disulfide S-S exchange reaction is shown.

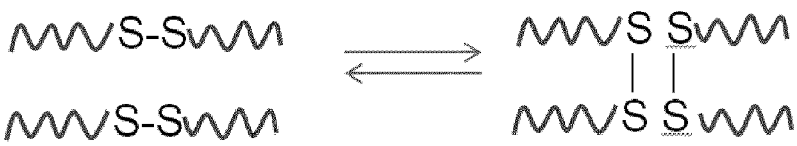

The method of using S-S reversible bonding for self-healing is expected to be widely applicable to low-Tg materials, e.g., polyurethanes and polyesters elastomers. The applicability for higher Tg materials may be restricted due to the limited mobility of chains in glassy polymers [Ref.5]. Obviously, the self-healing process needs to take place above the Tg of the material, since the chain segments in the network need mobility to allow for the interchange reaction to take place. In the powder coating cases which possess high Tg of cured coating (Tg > 70 °C), the applicability of the solely disulfide reversible route may be limited, therefore particularly in the present invention the functional shape memory PCL diol used here to gain the mobility of the coating network supporting for the (S-S) exchange reaction.

Powder coating compositions typically comprise finely ground particles of pigment and binder, which are usually applied electrostatically to the substrate and then cure under heat. The binder comprises resin and crosslinker that react irreversibly to form a coating. It would be advantageous to have a system that allowed for repairing scratches, scrapes, nicks, and other surface damage. Both types of reversible bonding (S-S) and/or H bonding in urea or urethanes allow for damage to the coatings to be repaired.

Dynamic covalent bonds, e.g. reversible disulfide bonds, obtained by disulfide metathesis chemistry, are introduced as a new crosslinker into a polycaprolactone (PCL) containing polyurethane material. It is expected that, after introduction of a crack into the PU thermoset, S-S bonds preferentially break; generating sulfenyl radicals, while the shape memory effect obtained from PCL favours the crack closure at temperatures above the melting point of PCL, simultaneously resulting in a reformation of the reversible crosslinks.

The exchange reaction of disulfide groups can lead to a renewal of crosslinks across damaged surfaces. Since both formation and re-formation essentially needs an intimate contact of materials, the flow properties of the materials should be seriously considered, so that the surfaces of damaged materials can easily approach each other for bond re-formation. Healing this coating above Tm of the PCL (60 °C) induces enough mobility supporting for the re-formation of the S-S bonding.

The invention has high commercial value, due to its simplicity and raw material availability, easy to prepare, no need to involve complex synthesis, suitable for industrial use.

The present inventive self-healing powder coatings heal large cracks or scratches, are compatible with wide ranges of surfaces, are inexpensive, are suitable for powder coating production process, are durable and healable from repeated damages, have superior mechanical strength, and are provided for use with multi-functional coatings having corrosion resistant, antifouling and antimicrobial properties. Marine, automobile, aerospace and various defence organizations will be interested in this technology.

Various embodiments of the present invention will hereinafter be described, also in conjunction with the enclosed drawings under reference to FIG 1 through FIG 9. The present invention is not limited to these embodiments.

As used herein the term "self-healing" refers to coatings that return to original shape, gloss or appearance after being scratched. In a specific embodiment of the present invention, the novelty lies in a self-healing polyurethane powder coatings, particularly poly (urea-urethane) powder coatings, using shape memory assisted and aromatic disulfide reversible bond formation. So, according to a preferred embodiment of the present invention, it relates to a self-healing material which has urea and aromatic disulfide bridge introduced into polymer coating network via the new form of polymer crosslinker for PU powder coating system. This new crosslinker or intermediated crosslinker, a product of polyisocyanate with diamine disulfide, has the structure as below or comprises structure elements based on such structures.

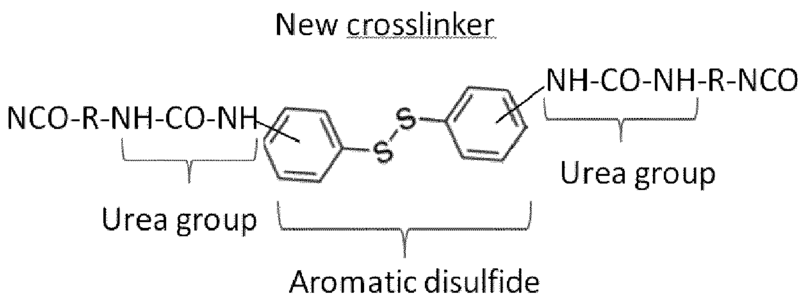


In another embodiment, chemically crosslinked semi-crystalline shape memory component (eg. PCL with a Tm of 60 °C) is used as a switch unit to provide the shape memory effect for crack closure, then the healing will follow by the reversible aromatic disulfide formation.

Polyurethane powder coating is for instance the product of the reaction between hydroxyl terminated polyester binder (PE-OH) with isocyanate terminated crosslinker (s). To create the self-healing effect it needs to have disulfide reversible bridges in the polymer network of the cured coating. To obtain that, either the polymer binder (resin) or the crosslinker need to contain disulfide bridges in its polymer chain. However, introducing disulfide bridges in the polymer chain of a binder resin for a powder coating involves a lot of synthesis work and would change the characteristics needed for powder coating resin binder as Tg, powder form, molecular weight, viscosity etc. Hence, another way to achieve the above-mentioned goal is the use of crosslinkers which contain disulfide bonds in its polymer structures. However, in the current market there is no commercial isocyanate terminated crosslinker available which contain disulfide bonds, particularly the deactivated isocyanate (S-S) containing crosslinkers for powder coatings. Therefore, the present invention also provides a new and simple way how to create and how to use this new crosslinker to reach the self-healing effect for the coatings.

Thus, in another aspect the invention provides a new crosslinker for polyurethane powder coating. The new crosslinker used in the PU powder coatings according to the present invention is a isocyanate-terminated urea and disulfide bridges containing crosslinker causing the healing effect for the coatings.

The reversible aromatic disulfide bridge can be introduced in the polymer network via the new isocyanate terminated crosslinker, a result of the reaction between excess isocyanate and diaminearyl disulfide, directly used as a component in powder coating composition. Unlike Diels-Alder route often requires new synthesis for incorporating the

furan-bismaleimid into the polymer network, diamine disulfide (bis(4-aminophenyl)disulfide), is commercial available in powder form with Tm of about 80 °C, and can be used directly in the powder coating according to the present invention.

Polyurethane is a kind of polymer that has typical hard/soft segmental dual-component structure. If the soft segment is able to significantly alter its stiffness by glass transition Tg or melting Tm, meanwhile the hard segment is elastic within this range of temperature, then the polyurethane can exhibit heating responsive shape memory effect. PCL is a linear semicrystalline polymer with a low Tg, often used as a shape memory agent because of its sharp transition temperature range. In this concept PCL diol is preferably used to be incorporated in the soft segment of the polyurethane establishing shape memory effect in the polyurethane network. This shape memory effect will assist the healing process as described above.

The remarkable self-healing ability of this system could be attributed by several effects: (1) reversible aromatic disulfide exchange, (2) dynamic urea bond, and (3) shape memory effect, for instance from PCL in the polymer network.

The polyurethane coatings of the invention are for instance obtained by curing at least a part or all of the new isocyanate terminated disulfide containing crosslinker (namely new crosslinker within this application) with hydroxyl terminated polymers saturated polyester and hydroxyl terminated polycaprolactone.

The present invention also provides polyurethane self-healing powder coating material compositions comprising:

1) 10-90 % by weight of at least one amorphous and/or (semi)crystalline polyester with a OH number of 20-200 mg KOH/g and with a Tg between 40-80 °C or with a melting point of from 50 to 120 °C.

2) up to 30 % by weight of a shape memory polymer, for instance a hydroxyl terminated polycarprolactone,

3) up to 50 % by weight of at least one curing agent/crosslinker based on blocked polyisocyanates, and/or uretdiones or a mixture thereof, having a functionality of at least 2;

4) 10-100 % by mol of the new crosslinker over the total isocyanate terminated crosslinker used to react with hydroxyl polymers. The new crosslinker contains urea and disulfide linkages, as a result of the reaction of excess isocyanate and aromatic disulfide amino obtained during the curing process, and will instantly further react with hydroxyl polymers in the composition to form a polymer coating network. The present invention is also not limited to the option of preparing this new crosslinker (urea linkages and disulfide linkages containing crosslinker) separately with a blocking agent and then further blend it with other components in the powder coating composition.

5) 0-50 % by weight of auxiliaries and additives.

Possible compositions of self-healing polyurethane powder coating compositions according to the present invention are summarized in Table 1 below:

Table 1

| Chemical name | Range (wt%) |
|---|---|
| Hydroxyl polyester resin (s) | 10-90 |
| Hydroxyl terminated polycaprolactone resin (s) | 1-30 |
| Polyisocyanate (s) | 1-50 |
| Aromatic diamine disulfide | 1-10 |
| Catalyst | 0-5 |
| Flow reagent additive | 0-15 |
| Pigment | 0-50 |

The polymer binder resin is an amorphous or a mixture of (semi)crystalline saturated polyesters with hydroxyl termination. The hydroxyl polyester used in the present invention has an OH value between 10-350 mg KOH/g, in particular 10-200 mg KOH/g, and a Tg of between 30-80 °C, preferably higher than 45 °C but below 80 °C. The number average molecular weight (Mn in g/mol) of the resin is preferably between about 1000 and about 15000, preferably between about 2000 and about 10000, preferably between about 2000 and about 8000.

The shape memory polymer used in the self-healing composition according to the present invention is preferably a hydroxyl polycaprolactone. The Mw of the hydroxyl polycaprolactone (PCL-OH) is between 1000 -15000 g/mol, preferably 3000-10m000 g/mol, more preferably between 4000 - 8000 g/mol. The amount of PCL-OH is between 1 to 30 wt%, preferably 10-30 wt%, more preferably between 10-20 wt%. The functionality of PCL-OH can be diol or triol, but is preferably diol. Other polymers can be used as shape memory component, such as for instance polytetramethylene ether glycol.

In one embodiment, the shape memory component of the composition according to the present invention, when heated to at least its glass transition temperature (Tg), can release the stored strain energy and reverse the deformation in the self-healing product. Examples of materials for use as such shape memory component include, but are not limited to shape memory polymers such as polyurethane. Examples of the healing component can comprise polymers such as thermoplastic polymers, compositions, and blends. These polymers can comprise, for example, semi crystalline polymers capable of melting, low-melting point thermoplastic polymers.

As curing agents/crosslinker is preferably based on polyisocyanates, it is possible in principle to use the known curing agents in the field of powder coating materials. It is preferred to use polyisocyanates containing blocking agents and also internally blocked polyisocyanates. Accordingly, the powder coating materials of the invention may comprise curing agents based on blocked polyisocyanates, blocked isocyanurates, and uretdiones, alone or in mixtures. The curing agents can be a mixture of di-functional or trifunctional isocyanate crosslinkers. The starting components are preferably selected from isophorone disiocyanate (lPDI), or hexamethylene diisocyanate (HDI), or dicyclohexylmethane-4,4'-disiocyanate (HMDI), or a mixture thereof, with Tg between 50-70 °C and % NCO from 10-20%. The ratio of isocyanate terminated crosslinker to hydroxyl resins, NCO groups available per OH group of the resin, is from 1 to 1.5, preferably from 1 to 1.3.

Customarily, the new crosslinkers, isocyanate terminated disulfide (S-S) containing crosslinkers, particularly isocyanate terminated urea and disulfide bonds containing crosslinkers, are prepared from at least one di-functional amine, preferably from diamino diphenyl disulfide, particularly bis(4-aminophenyl) disulfide (APD), with isocyanate in a ratio of NCO group to $NH_2$ group from 2:1 or 2.1:1 to 2.3:1. An excess of NCO groups is preferably used to obtain the isocyanate terminated new crosslinker. APD can be used to create the new crosslinker in the composition of the present invention, but other diamine disulfide or functional disulfide containing crosslinkers can be used as well. Wt% of aromatic diamine sulfide used in the inventive composition lies between 1-10 wt%, preferably between 2 - 7 wt%. In other words, the mol % of the new crosslinker formed and reacted with the hydroxyl resins can be in the range from 1 to 100 mol % of total isocyanate terminated crosslinker (s) which will react with hydroxyl polymers to form the final polymer coating network.

The reaction to create new isocyanate terminated disulfide containing crosslinker is preferably being performed at a temperature comprised from 130 to 250 °C, particularly it is formed when the inventive powder composition is heated to the unblocking temperature of the blocked isocyanate, or to the activated temperature of the polyisocyanate during curing process.

In some embodiments of the present invention, diamino difulfides comprising diaminoaryl alkyl disulfides and diaminodiaryl disulfides can be used to create the new crosslinker or intermediate crosslinker for the inventive powder composition. These amino disulfides have general formulas $(NH_2)_2$Ar-S-S-R, $(NH_2)_2$Ar-S-S-Ar', and $NH_2$-Ar-S-S-Ar'-$NH_2$, where Ar and Ar'are monocyclic or polycyclic aromatic or heteroaromatic hydrocarbon radicals, and R is a straight-chain or branched aliphatic, cycloaliphatic or aralkyl aliphatic hydrocarbon radical. The radicals Ar and Ar' may be identical Ar=Ar', or Ar≠Ar'. In monocyclic radicals, the aromatic primary amino groups may be located in ortho or 2-position, in meta or 3-position, or in para or 4-position in relation to the disulfide bridging group. A mixture of diamino disulfides can be used. Other diamino disulfides are for instance of the general formula $NH_2$-Ar-S-S-R'-$NH_2$ and $NH_2$-R'-S-S-R'-$NH_2$ in which R' is a tertiary aliphatic or cycloaliphatic hydrocarbon radical in which the amino group is attached to the tertiary carbon atom.

As an example the new crosslinker or intermediate crosslinker has the structure as below:

New crosslinker

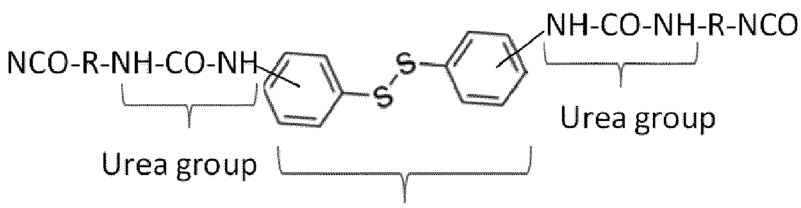

Urea group

Urea group

Aromatic disulfide

The auxiliaries and additives which might be present in the polyurethane powder coating materials of the present invention are, for example, one or more levelling agents, flow control agents, pigments, fillers, dyes, catalysts, light

stabilizers, heat stabilizers, antioxidants, waxes, biocides, and degassing agents and/or effect additives. They are normally present in amounts of 0.5-50% by weight. The utilization or non-utilization of pigments, whether organic or inorganic based, can be implemented into the current invention. Such pigments include, but are not limited to: titanium dioxides, antimony oxides, chromium oxides, zinc oxides, calcium carbonates, fumed silicas, and zinc phosphates. Additionally, different forms of fillers, including, but not limited to, barium sulfates, calcium carbonates, and/or baryates can be used as well.

Catalyst can also be used to accelerate the disulfide metathesis for self-healing effect: e.g. aryl phosphines such as triphenyl phosphine and alkyl phosphites such as tri-n-octyl phosphite, or base catalysts eg. Dibutyltin dilaurate (DBTDL), 1,4-Diazabicyclo[2.2.2]octane (DABCO) and 1,8-Diazabicyclo[5.4.0]undec-7-ene (Dbu). Other catalysts can be used to accelerate the reaction of the hydroxyl group with the -NCO group,

Heat-curable pulverulent compositions, particularly polyurethane powder coatings, can be obtained by reacting a hydroxyl-containing resin with a blocked polyisocyanate. Such reactions are known, and are in widespread use. Conventional PU powder hardeners include, for example, blocked polyisocyanates such as ε -caprolactam-blocked isophorone diisocyanate (IPDI) adducts, and/or uretdione. The key concept of the present invention lies among others in introducing isocyanate terminated disulfide bond containing crosslinkers into the polymer network. This new crosslinker is created directly during the curing process of the powder coatings by using diamine disulfide which can be blended directly in the composition of the polyurethane powder coatings.

The reactions and process are summarized in scheme 2 below:

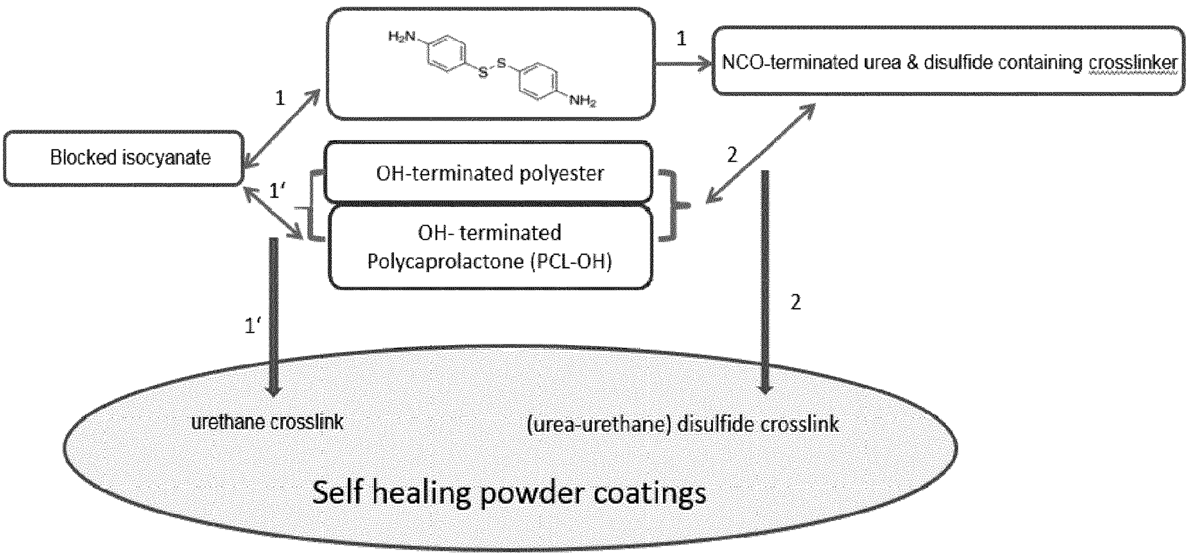


(1) reacting of a deactivated diisocyanate (blocked isocyanate or uretdione, or latent free isocyanate) with an aromatic disulfide to form a terminated isocyanate urea and an aromatic disulfide containing new crosslinker.
When heat for curing is applied and temperature reaches the un-block temperature of the blocked isocyanate (eg. 170 °C) or uretdione (at 180 °C), the isocyanate groups will preferably react with diamine disulfide to form the new-NCO terminated urea and (S-S) bonds crosslinker (1). The mol/equivalent ratios of the isocyanate group (-NCO) to the amine is minimum 2, preferably 2.1-2.3. The excess of NCO is used here to ensure obtaining preferably at least di-functional isocyanate terminated new crosslinker. Reaction (1) between amine groups with NCO groups occur preferably as compared to reaction (1') between OH groups with NCO groups.
(2) then the new crosslinker will further react with an -OH polyester (PE-OH) and PCL-OH to form urea-urethane crosslinks (reaction 2). If the standard isocyanate terminated crosslinkers are replaced at least partly by the new crosslinker, then also urethane crosslinks are obtained in the polymer coating network. The equivalent ratios between-NCO/OH group are between 1.7-1, preferably 1.3-1.1. The reactivity of this reaction can be adjusted either by the concentration of the catalyst or of an acid scavenger.

The polyurethanes of the present invention are obtained by curing at least a part or all of the new isocyanate terminated disulfide containing crosslinker (from 10 to 100% by mol) with hydroxyl terminated polymers (saturated polyester and polycaprolactone).

As observed in the examples described later, the isothermal DSC at curing temperature of 200 °C for the inventive self-healing PU composition showed that the curing reaction occurred quickly in less than 10 min at 200 °C as standard curing condions for pulyurethane powder coatings. The results of IR also prove the formation of urea linkages

present in the polymer network of the cured coatings as a result of the formation of the new crosslinker.

To prepare the self-healing powder coating materials of the present invention, components (1), (2), (3), (4) and (5) are homogenized in the melt. This can be done in suitable apparatus, such as in heatable kneaders, but preferably by extrusion, during which temperature limits of 110 to 120° C ought not to be exceeded. The extruded homogenized mass is cooled to room temperature, comminuted appropriately, ground to a ready-to spray powder, and sieved off to a particle size < 100 $\mu$m. The application of this powder onto a substrate can be performed by using any method available, e.g. electrostatic spraying guns or a fluidized bed.

Furthermore, if free latent polyisocyanate are utilized it is useful to produce two separate powders, one including a ground extrudate of hydroxyl functional polyester resins, hydroxyl shape memory polymer with diamine disulfide and additives, and the second ground powder comprising free polyisocyanate. These two powder compositions then will be blended by bonding techniques.

The compositions of the present invention may be applied on any of a variety of substrates, such as metallic, glass, wood, and/or polymeric substrates. The substrate can be provided at ambient or at elevated temperature, and the powder coating is then cured by exposure to elevated temperature or other suitable radiation for a certain period of time. The powder thus prepared can for instance be applied to degreased, iron-phosphatized steel or aluminum panels using an electrostatic powder spraying unit, and the coated panels are then baked/cured in a forced air oven at a temperature of from 150 °C to 250 °C for from 60 minutes to 5 min, preferably at from 170 °C to 240 °C. If necessary, the substrate can be prepared by common means known in the art like sand blasting, conversion coating etc. and/or one or more primer coatings can be applied before the substrate is coated with the coating composition of the present invention as described herein.

The ready to use powder is sprayed on aluminum substrate with a spray equipment GEMA gun, 70 kV, and then cured in an electric oven for 10-30 min at 150-250 °C.

The coating compositions of the present invention can be used as primers, fillers, pigmented topcoats and clear coats in the sector industry, particularly as aircraft and transportation coatings, wood, automotive, especially OEM or automotive refinish, or as a decorative coating in particular.

[Healing Test Methods]

As used herein, the term "self-healing" refers to coatings that return to their original shape or appearance after being damaged.

A widely utilized, indicative self-healing test for polymers is scratch healing. Self-healing coatings require this kind of test procedure to evaluate the damage healing potential, mostly scratch closing, and the subsequent restoration of functions such as aesthetics and corrosion protection.

For instance, scratch healing tests are suitable for the investigation of self-healing coatings and for the early characterization of the healing behaviour of experimental polymers available only in small quantities; however, such tests are not useful for determining the restoration of mechanical properties of a coating thus healed.

The self-healing performance, or "healing level", of the coatings is assessed using two different scratch/abrasion tests, generating scratches with different depths.

To verify the self-healing performance of the powder composition of the present invention, the powder was applied on an aluminum substrate, and a crosslinked film was formed by curing at 200 °C for 15 min. The panel was then allowed to cool to room temperature before being evaluated for the extent of healing. After cooling to room temperature, the coating was severely damaged by scratching.

The scratches made with a Stanley knife were analysed by profilometer and confirmed to be in the range from 0 to 1 $\mu$m in depth defined as ultrafine scratches, most ultrafine scratches being less than 0.6 $\mu$m in depth. Big scratches are defined as having a scratched depth of more than 5$\mu$m. After that, the scratches will be healed with any appropriate heat source such as a thermal or convection oven, liquid (i.e. warm water), heat gun, heat lamp, sunlight, other IR sources, hot room and the like.

The healing performance of the coating can also be assessed via gloss level reformation. The coating of the inventive composition is scratched with 30 double rubs with Scotch BriteTM. After that it will be healed with any appropriate heat source as mentioned above, and afterwards the 20° and 60° gloss is again measured. Film gloss was measured before being damaged, after being damaged and after the healing by heat application to quantitatively determine the ability of the finish to be restored through self-healing.

$$\% \text{ Gloss Recovery} = (\text{Healed gloss} / \text{Initial gloss}) \times 100\ \%$$

EXAMPLES

Example 1: composition of self-healing powder coatings according to the present invention

The composition of the self-healing powder coating is given in table 2.

Table 2

| Example 1 | | wt% |
|---|---|---|
| Hydroxyl saturated polyester (Rucote 107) | OH value 47 mg KOH/g Tg of 63 °C | 50,14 |
| Polyisocyanate (VESTAGON B 1530) | | 24,09 |
| Bis(4-aminophenyl)disulfide (APD) | | 3,58 |
| Hydroxyl polycarolactone (CAPA 2803) | | 15,04 |
| WORLEE-ADD ST 70 100% | | 0,5 |
| Araldite PT 912 | | 0,95 |
| RESIFLOW PL 200 | | 1 |
| WORLEE ADD 902 | | 1 |
| BENZOIN | | 0,2 |
| LANCO WAX TF 1780 | | 1,5 |
| Tianium dioxide | | 2 |

Vestagon B1530 is a commercial trifunctional blocked isocyanate, a polyisocyanate adduct. It is used in combination with hydroxyl functional resins. Due to the ε -Caprolactam blocked NCO-groups it is stable during processing up to the unblocking temperature of more than 170 °C. When Vestagon B1530 is unblocked at 170 °C, it will instantly react with APD to form the newisocyanate terminated urea and disulfide containing crosslinker which will further react with hydroxyl groups of the polyester resins and polycaprolactone to form the polymer network. More details will be discussed in Example 4.

Example 2: Composition of the reference PU powder coating for Example 1 (Table 3)

**Table 3**

| Example 2/ Reference | Wt% |
|---|---|
| Rucote 107 | 75,4 |
| VESTAGON B 1530 | 17,45 |
| WORLEE-ADD ST 70 100% | 0,5 |
| Araldite PT 912 | 0,95 |
| RESIFLOW PL 200 | 1 |
| WORLEE ADD 902 | 1 |
| BENZOIN | 0,2 |
| LANCO WAX TF 1780 | 1,5 |
| Titanium dioxide | 2 |

Example 3: composition of self-healing powder coatings according to the present invention

Table 4

| Example 3 | | **Wt%** |
|---|---|---|
| Crylcoat 2818-0 | OH: 100 mgKOH/g | 34,42 |
| VESTAGON B 1530 | | 37,78 |
| Bis(4-aminophenyl)disulfide (APD) | | 5,65 |
| CAPA 2803 | | 15 |
| WORLEE-ADD ST 70 100% | | 0,5 |
| Araldite PT 912 | | 0,95 |
| RESIFLOW PL 200 | | 1 |
| WORLEE ADD 902 | | 1 |
| BENZOIN | | 0,2 |
| LANCO WAX TF 1780 | | 1,5 |
| Tianium dioxide | | 2 |

Example 4: Characteristics of the inventive powder coatings /Test results obtained by DSC, and IR

The reactivity of the $NH_2$ group of APD with the NCO group of Vestagon 1530 can be readily determined via simple DSC tests.

FIG 1 of the accompanying figures shows the dynamic DSC curve of the curing reaction between polyisocyanate Vestagon 1530 with diamine disulfide APD without any catalyst to create the new isocyanate terminated urea and disulfide containing crosslinker. The curing reaction started at 170 °C at the unblocking temperature for Vestagon 1530.

FIG 2 shows the isothermal DSC of APD with Vestagon 1530 for 30 min isothermally at 200 °C, the curing temperature usually applied for PU powder coatings. It can be clearly seen that the reaction happened quickly and was completed in less than 2 min, even in the presence of catalysts used for the PU powder coating of example 1. It proves that the reactivity between diamine and isocyanate is extremely high, therefore in the powder compositions of the present invention when heat is applied and reach 170 °C, the isocyanate group will preferably first react with the $NH_2$ group of APD to form the new intermediate crosslinker, which will then further react with hydroxyl polymers.

FIG 3a shows the dynamic DSC of the curing curve of the powder composition of Example 1 (green curve), and its reference (violet curve). FIG 3a shows that the curing reaction occurred at 170 °C where the Vestagon 1530 was unblocked. Comparing the curve of example 1 (green) to the reference (violet), the curing peak of example 1 is broader comprising two overlapping peaks, which could be attributed to the peak of reaction of $NH_2$ with NCO and to the peak of reaction of NCO with OH groups.

FIG 3b shows isothermally curing of powder example 1 at 200 °C for 30 min. It proves that the curing of isocyanate crosslinker (s) with hydroxyl polymers in composition of Example 1, even with the intermediately creating of new crosslinker, still completed in a very short time less than 5 min whereas 15 min is usually used for curing powder PU coatings at 200 °C.

FIG 4 shows the IR results of the reference coating sample (without using APD and PCL) and the IR results of the self-healing coated panel of example 1 after curing at 200 °C for 15 min.

It was observed that the peak at 1650-1688 $cm^{-1}$ attributed to the urea carbonyl group (NH-CO-NH), which appears in the IR curve of Example 1 compared to the reference, proving the presence of urea linkages in the polymer coating network.

The peak at 1710 cm-1 attributed to the urethane carbonyl group, which appears in both the reference coating and the coating of Example1, while the peak at 2275-2250 $cm^{-1}$ attributed to isocyanate NCO which disappeared in both reference and Example 1, as a result of the completion of the reaction of NCO with the hydroxyl groups. The result

proves that the new terminated NCO- crosslinker further reacted with the hydroxyl groups in the polymers of the composition of the present invention.

Example 5: Process of preparing the powder coatings

The following example illustrates the process of the present invention. The process conditions are as follows:

All components in Table 2 were premixed in a high-speed mixer Thermoprism Pilot 3 for 1-2 min and then extruded in a twin-screw ZSK-18 extruder at a screw speed of 400 rpm with temperature zones of 30/60/110/110/110 [°C] and torque of 57-63 [U/min]. The compound obtained was then cooled down, granulated and fine ground to obtain a powder having particle sizes of less than 90 μ m.

Example 6: Healing tests/ scratch closing of Example 1 with Profilometer and Microscopy

The powder coating composition of Example 1 was applied on an aluminum panel and cured for 15 minutes at 200 °C. The film thickness of the coating obtained was approximately 60-80 micron.

After curing, the film surfaces were analysed using a profilometer and subsequently scratched with a Stanley Knife. Two different scratches with different depths of indentation (big scratches of >10 um, FIG 5, and middle scratches of about 4-5 μm, FIG 6 were made into the coating of Example 1). The depths of the scratches were measured by using the profilometer, the width of the scratches were measured via microscopy. In the tests as performed, the scratches were measured with a profilometer Marsurf M300 C, Digital Microscop Kamera DigiMicro 2.0 Scale (with 200 times magnification), and optical microscopy (1000 times magnification) before healing. Then, the panel with the scratches was placed in an oven at 150 °C and heated for 2 hours (and for further 15 hours). After that, the scratched positions were remeasured with the profilometer and followed with optical microscopy.

FIG 5 of Example 6 shows a healing test with deep scratch (>10μm) evaluated for coating of Example 1, healing at 150 °C for 2h and after 15h with profilometer Marsurf M300 C and with microscopy. FIG 5a shows a scratch captured by Digital Microscop Kamera DigiMicro 2.0 Scale before healing. FIG 5b shows a scratch captured by DigiMicro 2.0 Scale after 150°C for 2h. FIG 5c shows a scratch captured by DigiMicro 2.0 Scale after 150°C for 15h. More in detail, FIG 5d shows a deep scratch at position 1 (10,8 m) nearly completely healed after 2 hours at 150 °C. The depth of the scratch was reduced from 10,8 μm to 1,25 μm, which data were measured by profilometer and it is shown in the micrographs captured by a DigiMicro 2.0 Scale that the crack nearly completely closed after 2 hours. However, further heating up to 15 hours did not improve the healing performance in this case, possibly due to coating removal, but scratches were clearly reduced in severity by the crack closure healing mechanism.

From the micrographs of FIG 6a it can be seen that the self-healing performance of coatings made from the composition of Example 1, was such that a majority of the scratches were healed nearly completely after application of heat at 150 °C for 2h, and nearly disappeared after 15 hours at 150 °C in case of middle deep scratches of a depth of 4-5 μm compared to the scratches present on reference coatings (Example 2), see FIG 6b. It means that the powder composition according to the present invention was able to heal completely the scratches with a depth of about 4-5 μm.

As a sufficient healing effect was shown after the treatment at 150 °C, further healing tests were performed at lower temperature, namely at 100 °C for 2h. FIG 7 shows that the healing performance of the coating obtained from the composition of example 1 also occurred effectively with deep scratches at a healing condition of 100 °C for 2h.

Further healing effect tests were also carried out as a function of temperature and time. Healing effects occurred at an even low temperature of 80 °C for 30 min, and most preferably it was shown that a heat treatment at 100 °C for 15-30min (see pictures as demonstration in FIG 9) has a good healing effect.

Example 7: Healing tests / Gloss Reformation

The coating with thickness between 70-80 μm of the Example 1 was scratched with 30 double rubs with Scotch BriteTM. Film gloss was recorded before scratching and after scratching and the healing by heat application to quantitatively determine the ability of the finish to be restored through self- healing.

Table 5: Gloss level of the coating of Example 1 before damaged, after being damaged and after being healed at 150 °C for 1h.

| | | Gloss Before scratching | Gloss-after 30 double rubs with Scotch Brite | Retention Gloss (%) | Gloss after healing at 150 °C 1h | Recovery Gloss (%) |
|---|---|---|---|---|---|---|
| Position 1 | 20° | 70.9 | 3.1 | 4.37 | 24.9 | 35.12 |
| | 60° | 88.1 | 20.7 | 23.50 | 44.4 | 50.40 |
| Position 2 | 20° | 73.3 | 4.5 | 6.14 | 37.7 | 51.43 |
| | 60° | 91.3 | 27.2 | 29.79 | 55.1 | 60.35 |
| Position 3 | 20° | 71.6 | 6.6 | 9.22 | 41.8 | 58.38 |
| | 60° | 87.8 | 34.4 | 39.18 | 59.6 | 67.88 |

* % Gloss retention = 100% × (scratched gloss/initial gloss)

** % Gloss Recovery = 100%x (healed gloss /initial gloss)

The initial gloss of the samples was in the range of 70-90 GU measured at 20° and 60°. The marring action resulted in a reduction of this gloss measure at 20° and 60° (Table 5). The recovery gloss values shown in Table 5 demonstrate the ability of the coating composition of the present invention to recover the original finish to more than 50% and 60%, respectively, of the original gloss value measure at 20° and 60°, by application of heat.

Example 8: Healing after being damaged by a Taber Abraser

Another kind of damage can be achieved with a Taber Abraser. In this test, the cured coatings made from the composition of Example 1 were scratched with a weighted abrasive paper for 1 cycle (500g weight, 3M 200 MP sand paper) using an Taber Abraser, 5131 Taber Abraser model. After scratching, the coated substrate was heated to 150 °C for 2 hours.

The abraded area was then imaged with a Digital Microscop Kamera DigiMicro 2.0 Scale before and after healing by heat application. From micrographs, it was evident that a majority of the scratches were healed with the application of heat. Several deeper scratches remained, possibly due to coating removal, but were clearly reduced in severity by the crack closure healing mechanism. Results are shown in FIG 8, which demonstrates an Example 8 healing test of the damaged area by Taber Abraser with micrographs of coating of Example 1 before healing (a) and after healing (b) at 150°C for 2 hours.

Example 9: Composition of self-healing powder coatings according to the present invention, using a mixture of diisocynates compounds

Table 6

| Example 9 | Wt% |
|---|---|
| Rucote 107 | 39.370 |

(continued)

| Example 9 | **Wt%** |
|---|---|
| VESTAGON B 1530 | 12.740 |
| VESTAGON BF 1540 | 5.460 |
| Bis(4-aminophenyl)disulfide | 2.670 |
| CAPA 2803 | 10.130 |
| WORLEE-ADD ST 70 100% | 0.500 |
| Araldite PT 912 | 0.950 |
| RESIFLOW PL 200 | 1.000 |
| WORLEE ADD 902 | 1.000 |
| BENZOIN | 0.200 |
| LANCO WAX TF 1780 | 1.500 |
| TI-SELECT TS6200 | 24.48 |

Example 10: Healing performance of the coatings of Example 9

The healing tests were carried out at 80 °C and 100 °C and at different times for both deep scratches (>10μm) and middle deep scratch (4-5μm). Surprisingly, when using the mixture of polyfunctional isocyanate (Vestagon B1530) and Uretdion (Vestagon BF1540) compounds in the composition according to the present invention, the healing effect improved significantly even at lower temperatures and with shorter treatment time, eg. 80 °C for 60min and 100 °C for 30min. FIG 9 demonstrates the healing performance of the coatings of example 9. It can be seen that with middle the scratches (5μm) the healing was already sufficient at 80 °C, but for deep scratches (>10μm) higher healing temperature, eg, 100 °C, was required to obtain sufficient healing/repairing.

References:

[1] J. Mater. Chem., 2008, 18, 41-62

[2]

a) Chem. Eur. J. 2007, 13, 9542 - 9546

b) European Polymer Journal 49 (2013), 1268-1286

c) Chem.Sci., 2011, 2, 696-700

[3] Progress in Organic Coatings 64 (2009) 156-162

[4] Book: "Self-Healing Composites Shape Memory" Guoqiang Li

[5] Macromolecules 2011, 44, 2536-2541 & WO 2010/128007 A1

[6] Mater. Horiz., 2014,1, 237-240

[7] Polymer 50 (2009) 4447-4454


Patents:

WO 2010/128007 A1, "Self healing polymer" disulfide links

WO 2015/127981A1 "Self healing elastomer and process for its preparation"

US 8460793 B2

US 7723405 B2

CN 105038502 A

CN 103254736 A

US 2015/0184304A1

## Claims

**1.** A powder coating composition comprising:

a. at least one component (A) comprising thermo-reversible (S-S) bonds and functional groups capable of reacting with an amorphous polymer binder (B) and/or at least one component (a1) comprising thermo-reversible (S-S) bonds and at least one component (a2) capable of reacting with (a1) to form component (A),
b. at least one amorphous polymer binder (B) with a Tg > 30 °C comprising functional groups capable of reacting with the functional groups of component (A) and
c. at least one (semi)crystalline component (C), preferably a polymer, with a melting point above or equal to 40 °C with functional groups capable of reacting with the functional groups of component (A) and/or the functional groups of the amorphous polymer binder (B).

**2.** Powder coating composition according to claim 1, **characterized in that** the functional groups of component (A) are -NCO groups and the functional groups of the (semi)crystalline component (C) and the functional groups of the amorphous polymer binder (B) are each -OH groups.

**3.** Powder coating composition according to the preceding claims, **characterised in that** component (a1) has free $-NH_2$ groups.

**4.** Powder coating composition according to the preceding claims, **characterized in that** the weight ratio of the amorphous polymer binder (B) to the (semi)crystalline component (C) is between 95/5 and 50/50, preferably 80/20 to 60/40.

**5.** Powder coating composition according to the preceding claims, **characterised in that** the molar ratio of component (a2) to component (a1) is between 5/1 and 1,5/1, preferably between 2,5/1 and 1,5/1.

**6.** Powder coating composition according to the preceding claims, **characterised in that** the molar ratio of the functional groups of component (A) divided by the sum of the functional groups of the (semi)crystalline component (C) and the functional groups of the amorphous polymer binder (B) is between 1 and 1,5, preferably between 1,1 and 1,3.

**7.** Powder coating composition according to the preceding claims, **characterised in that** the amorphous polymer binder (B) and the (semi)crystalline component (C) are each polyesters.

**8.** Powder coating composition according to the preceding claims, **characterised in that** the amorphous polymer binder (B) has a OH-value below 100, preferably below 50 mg KOH/g.

**9.** Powder coating composition according to the preceding claims, **characterised in that** the (semi)crystalline component (C) is polycaprolactone (PCL).

**10.** Powder coating composition according to claim 9, **characterised in that** PCL has a MW of higher than 2000 g/mol, preferably a MW of between 4000 and 8000 g/mol and an OH-value of higher than 10 mgKOH/g.

**11.** Powder coating composition according to the preceding claims, **characterised in that** the (semi)crystalline component (C) has a melting point of between 50 and 120 °C and a MW of between 3000 to 15000 g/mol, preferably 8000 to 15000 g/mol.

**12.** Powder coating composition according to any of the preceding claims, **characterised in that** it additionally comprises at least one curing agent/crosslinker for (B) and (C) which preferably is based on a member of the group consisting of blocked polyisocyanates, uretdiones, mixtures thereof and latent polyisocyanates with a functionality of at least 2 and preferably is present in an amount of 0.5 to 50 % by weight of the total powder coating composition.

**13.** Powder coating composition according to any of the preceding claims, **characterised in that** the (semi)crystalline component (C) is present in an amount of 0.5 to 30 % by weight of the total composition.

**14.** Powder coating composition according to any of the preceding claims, **characterised in that** component (A) is or comprises an aromatic disulfide, preferably a diphenyl disulfide, which even more preferably is selected from the group consisting of 4,4'-diaminodiphenyl disulfide, 2,2'-diaminodiphenyl disulfide, a mixture thereof; and 4,4'-ethylenedianiline.

**15.** Self-healing coating obtained from a powder coating composition according to any of the preceding claims, **characterized in that** the final coating after curing and/or self-healing has a Tg of at least 40 °C.

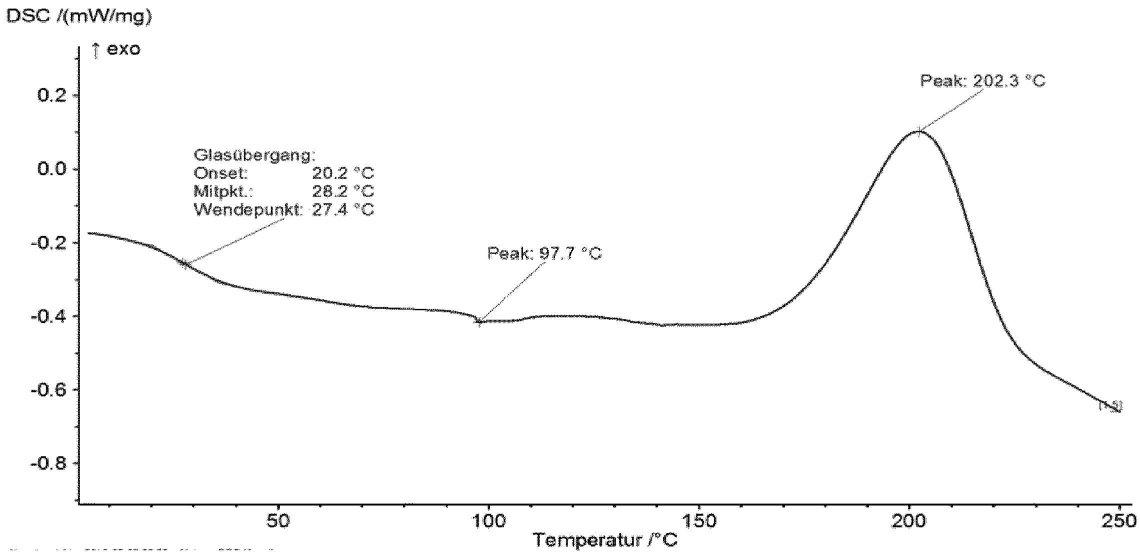
DSC /(mW/mg)
↑ exo
0.2
0.0
-0.2
-0.4
-0.6
-0.8
Glasübergang:
Onset: 20.2 °C
Mitpkt.: 28.2 °C
Wendepunkt: 27.4 °C
Peak: 97.7 °C
Peak: 202.3 °C
50
100
150
200
250
Temperatur /°C

FIG 1

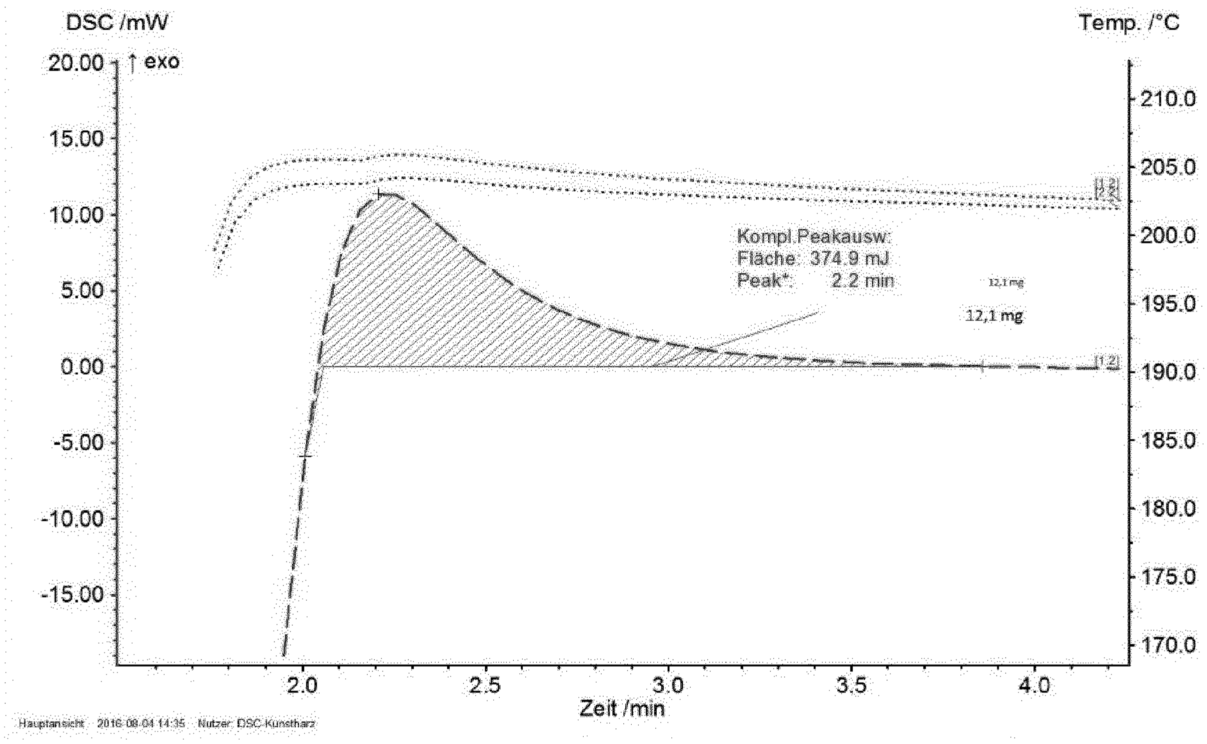
DSC /mW
↑ exo
Temp. /°C
20.00
15.00
10.00
5.00
0.00
-5.00
-10.00
-15.00
210.0
205.0
200.0
195.0
190.0
185.0
180.0
175.0
170.0
Kompl.Peakausw:
Fläche: 374.9 mJ
Peak*: 2.2 min
12,1 mg
2.0
2.5
3.0
3.5
4.0
Zeit /min
Hauptansicht 2016-08-04 14:35 Nutzer: DSC-Kunstharz

FIG 2

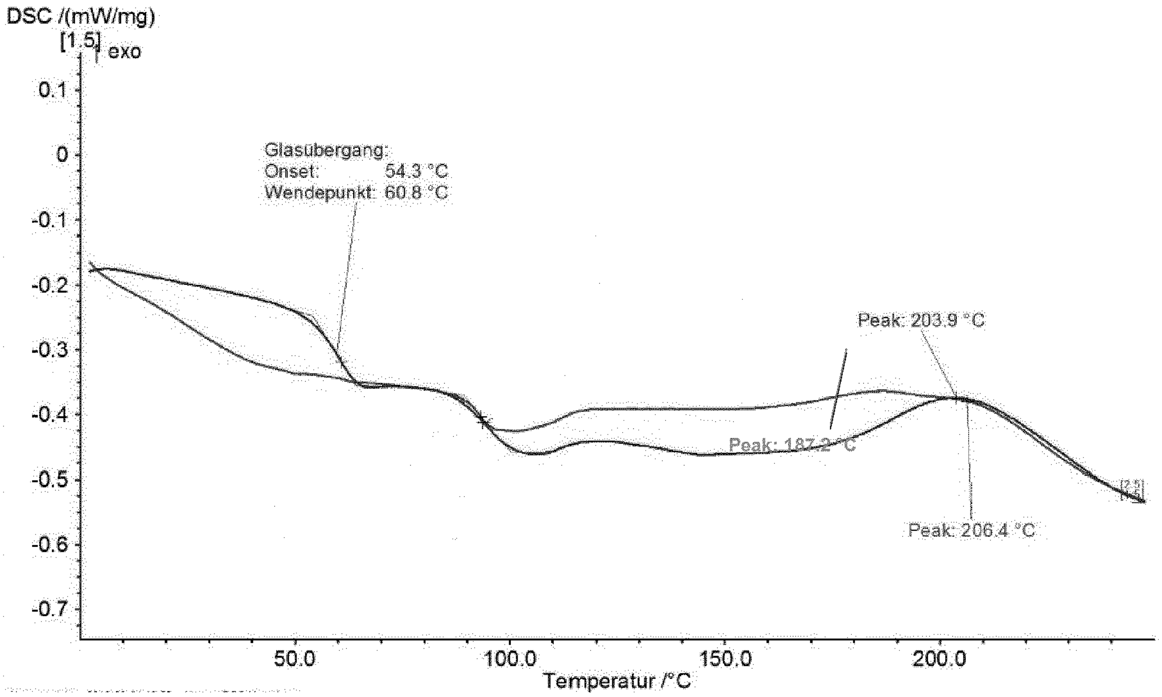
DSC /(mW/mg)
[1.5]
↑ exo
0.1
0
-0.1
-0.2
-0.3
-0.4
-0.5
-0.6
-0.7
Glasübergang:
Onset: 54.3 °C
Wendepunkt: 60.8 °C
Peak: 203.9 °C
Peak: 187.2 °C
Peak: 206.4 °C
50.0
100.0
150.0
200.0
Temperatur /°C

FIG 3a

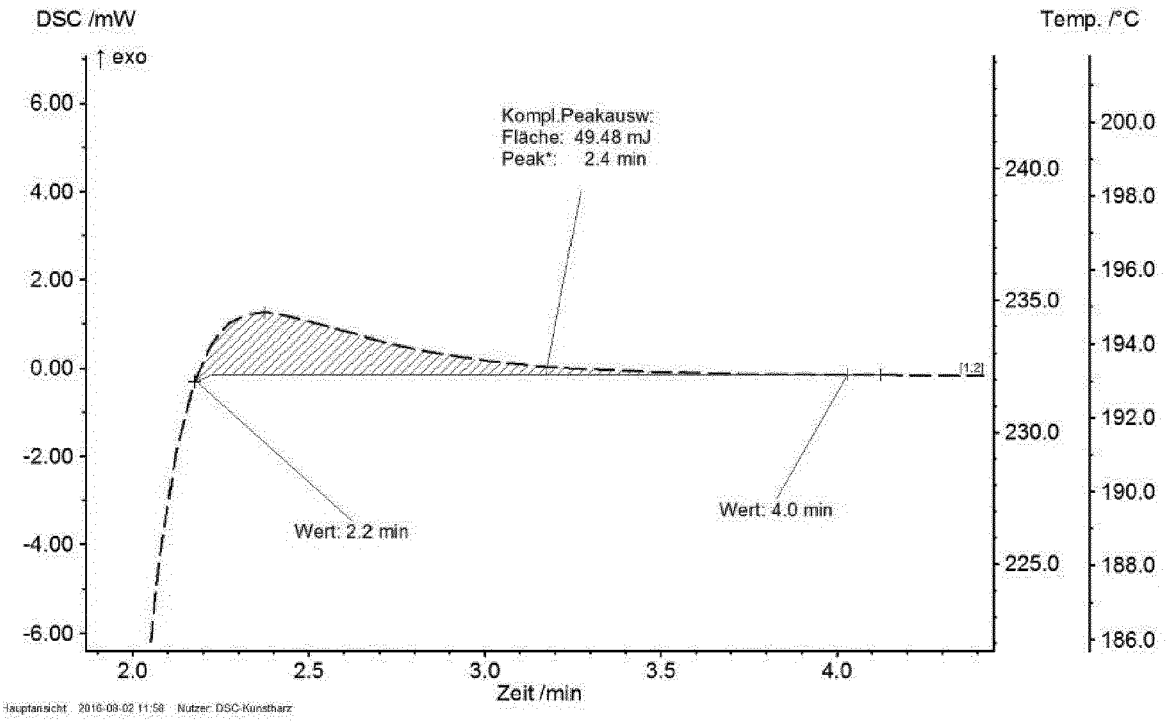
DSC /mW
↑ exo
Temp. /°C
6.00
4.00
2.00
0.00
-2.00
-4.00
-6.00
Kompl.Peakausw:
Fläche: 49.48 mJ
Peak*: 2.4 min
Wert: 2.2 min
Wert: 4.0 min
[1.2]
240.0
235.0
230.0
225.0
200.0
198.0
196.0
194.0
192.0
190.0
188.0
186.0
2.0
2.5
3.0
3.5
4.0
Zeit /min
Hauptansicht 2016-08-02 11:58 Nutzer: DSC-Kunstharz

FIG 3b

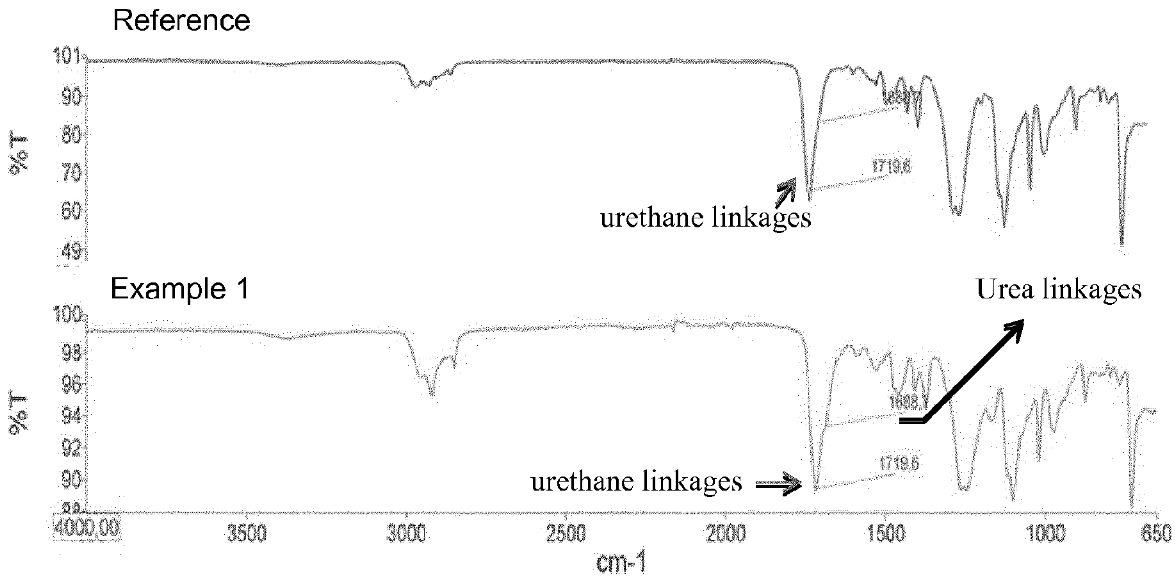
Reference
%T
urethane linkages
1719,6
Example 1
Urea linkages
%T
1688,1
1719,6
urethane linkages
4000,00
3500
3000
2500
2000
1500
1000
650
cm-1

FIG 4

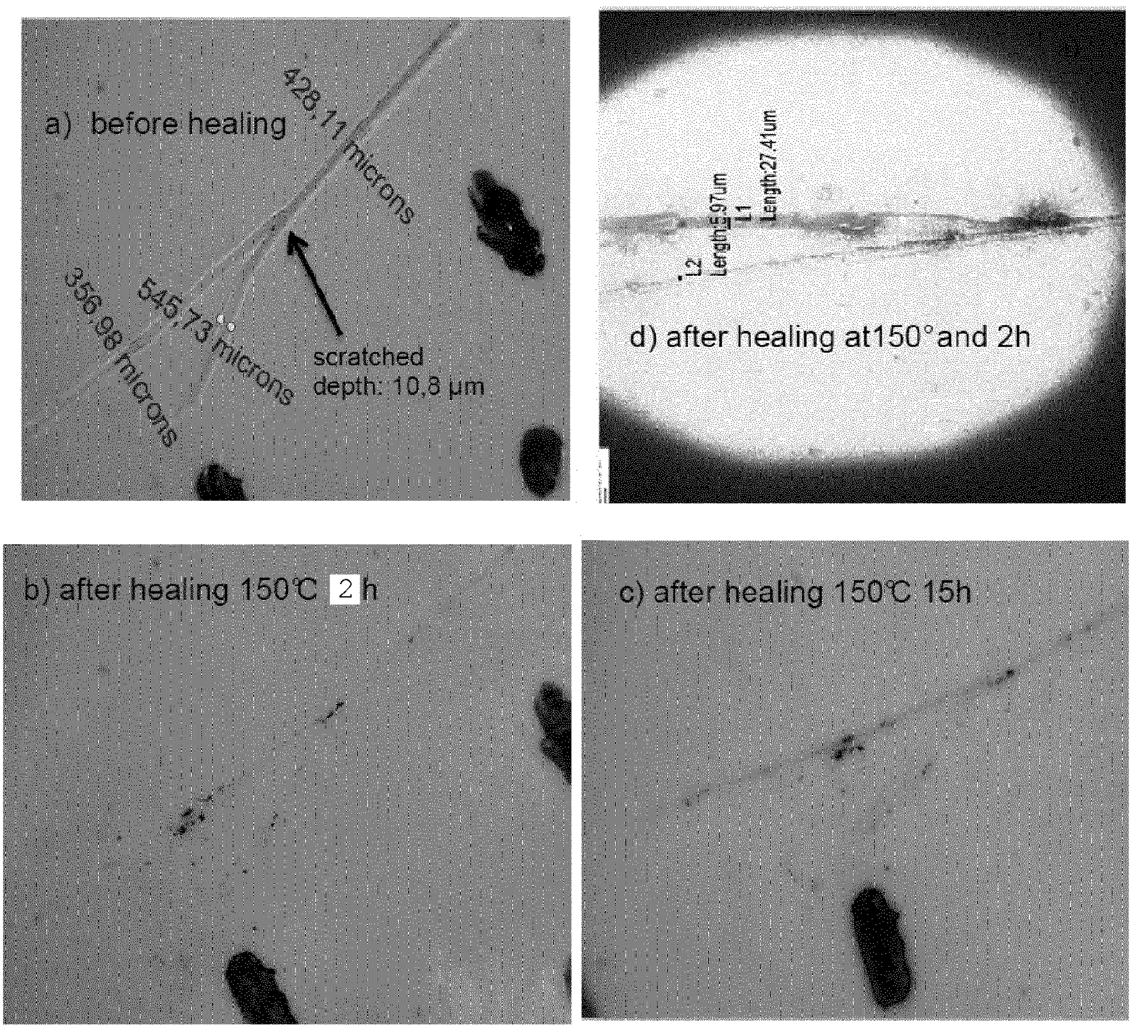
a) before healing
428,11 microns
545,73 microns
356,98 microns
scratched
depth: 10,8 μm
d) after healing at150°and 2h
Length:27.41um
b) after healing 150℃ 2 h
c) after healing 150℃ 15h

FIG 5

a)

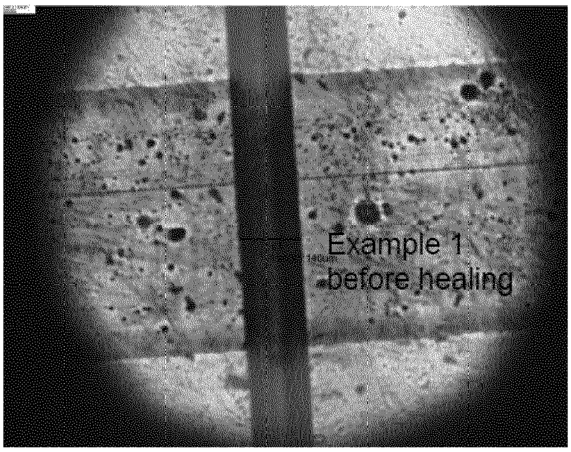


b)

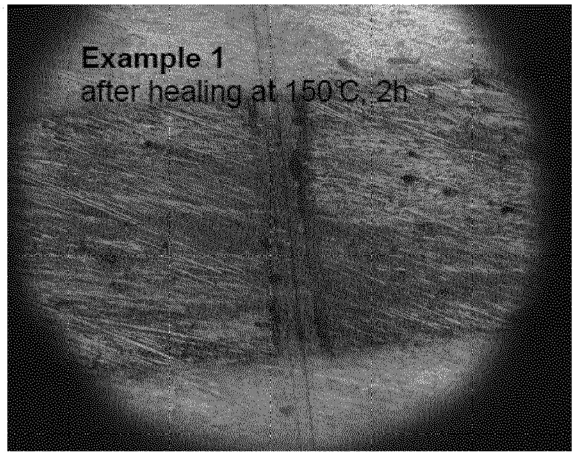


c)

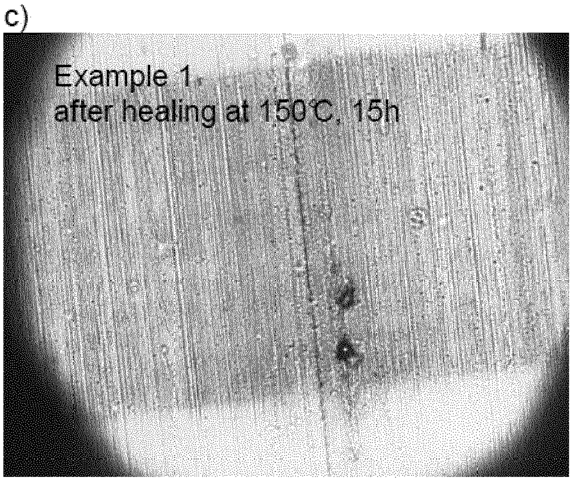


FIG 6a. Example 6 Healing test with middle deep scratches measured with microscopy (1000x magnification) of Example 1
a) scratch before healing; b) after healing at 150°C 2h; c) after further healing for 15h at 150°C

a)

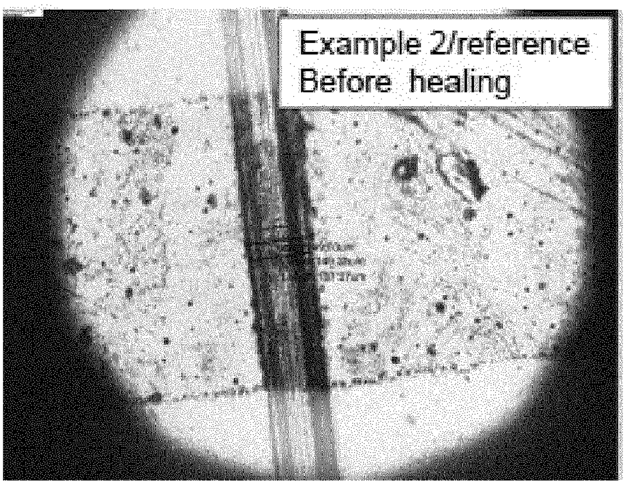


b)

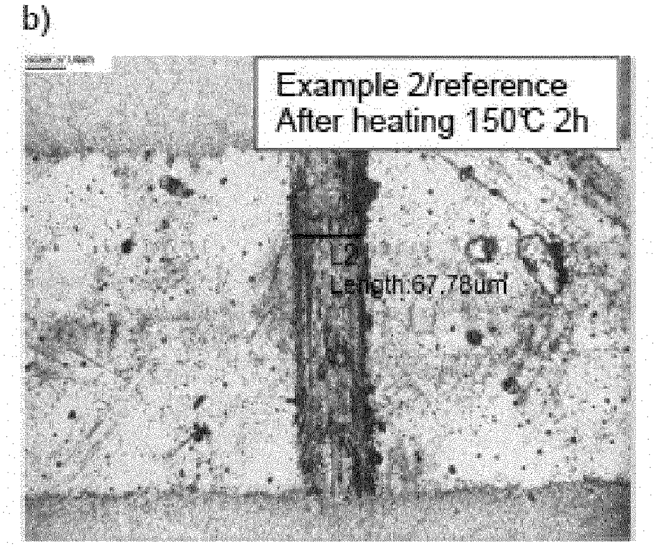


c)

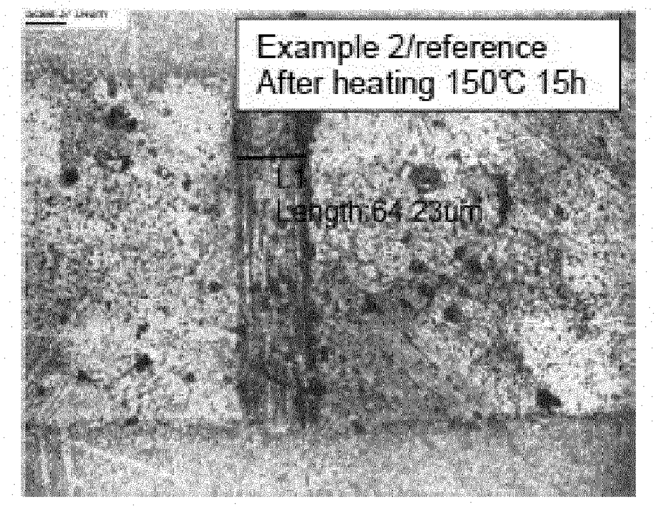


FIG 6b. Example 6 Healing test with middle deep scratches measured with microscopy (1000x magnification) of Example 2 (Reference)
a) scratch before healing; b) after healing at 150°C 2h; c) after further healing for 15h at 150°C

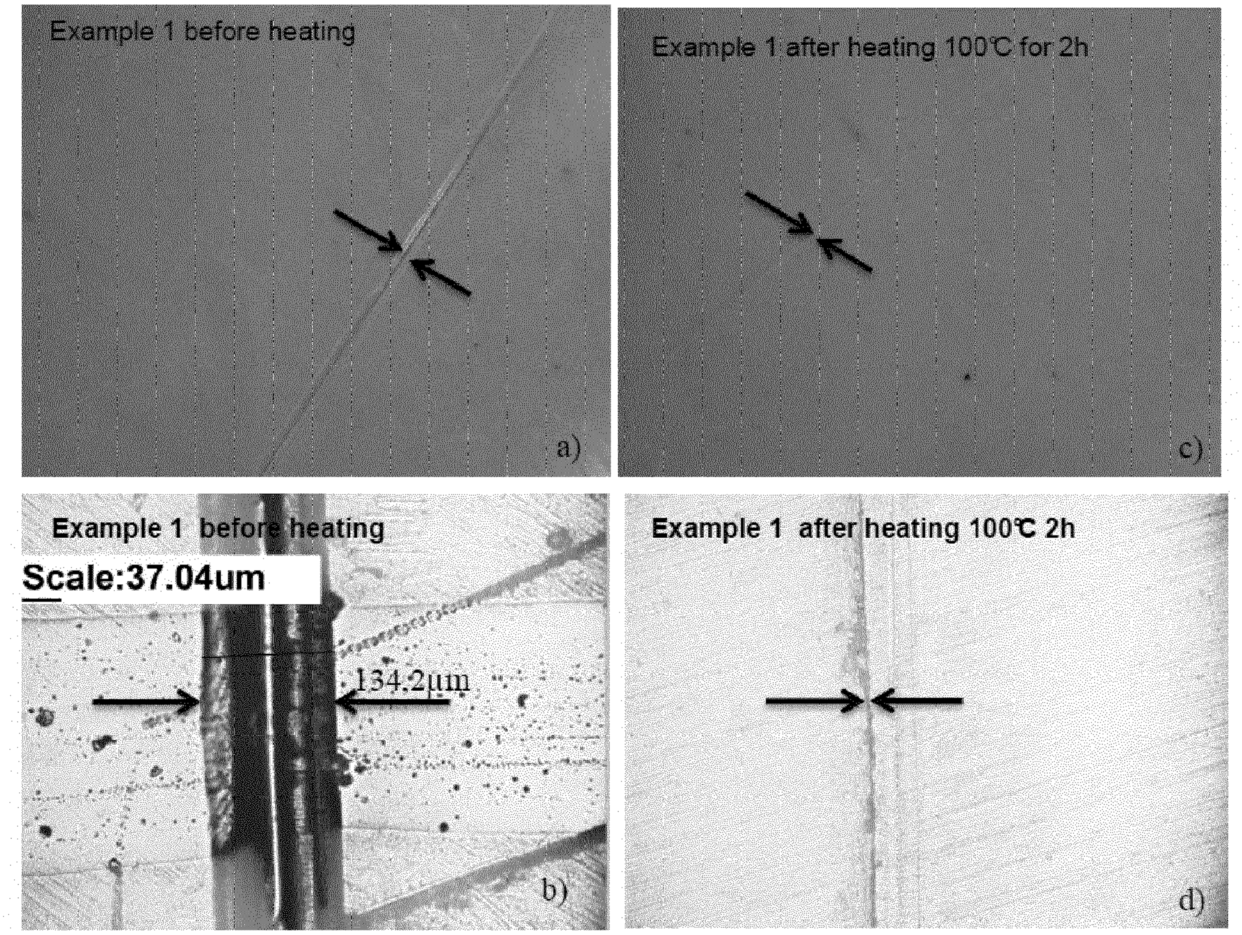


**FIG 7**. **Example** 6 Healing test at 100 ℃ for 2h

a) microcapture and b) microscopy of the scratch before healing

c) microcapture and d) microscopy of the scratch after healing at 100 ℃ for 2h

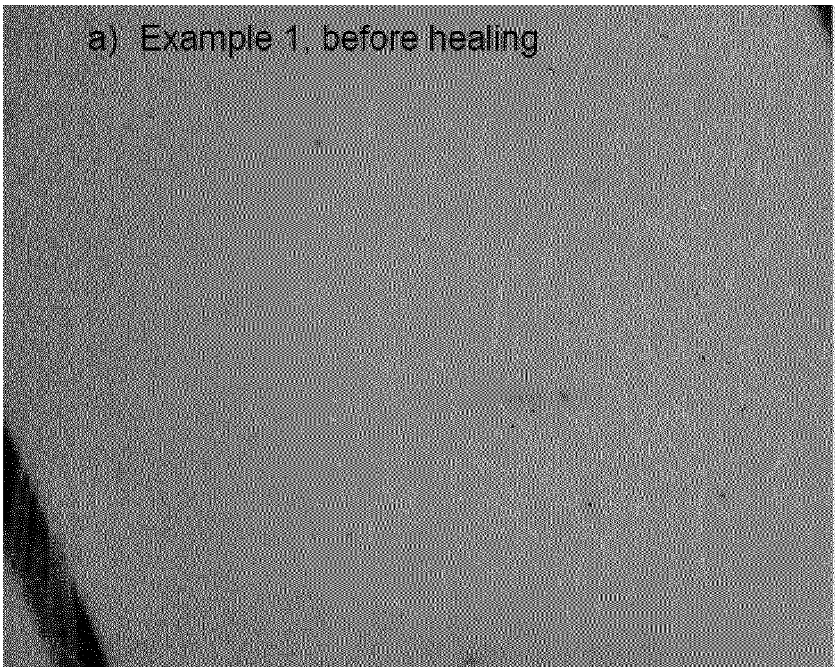
a) Example 1, before healing

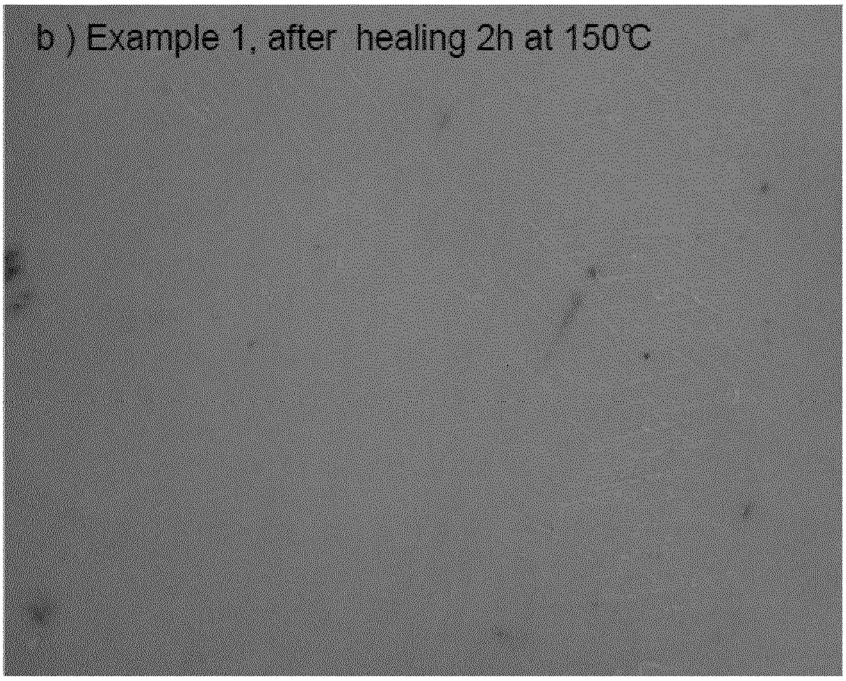
b ) Example 1, after healing 2h at 150℃

FIG 8

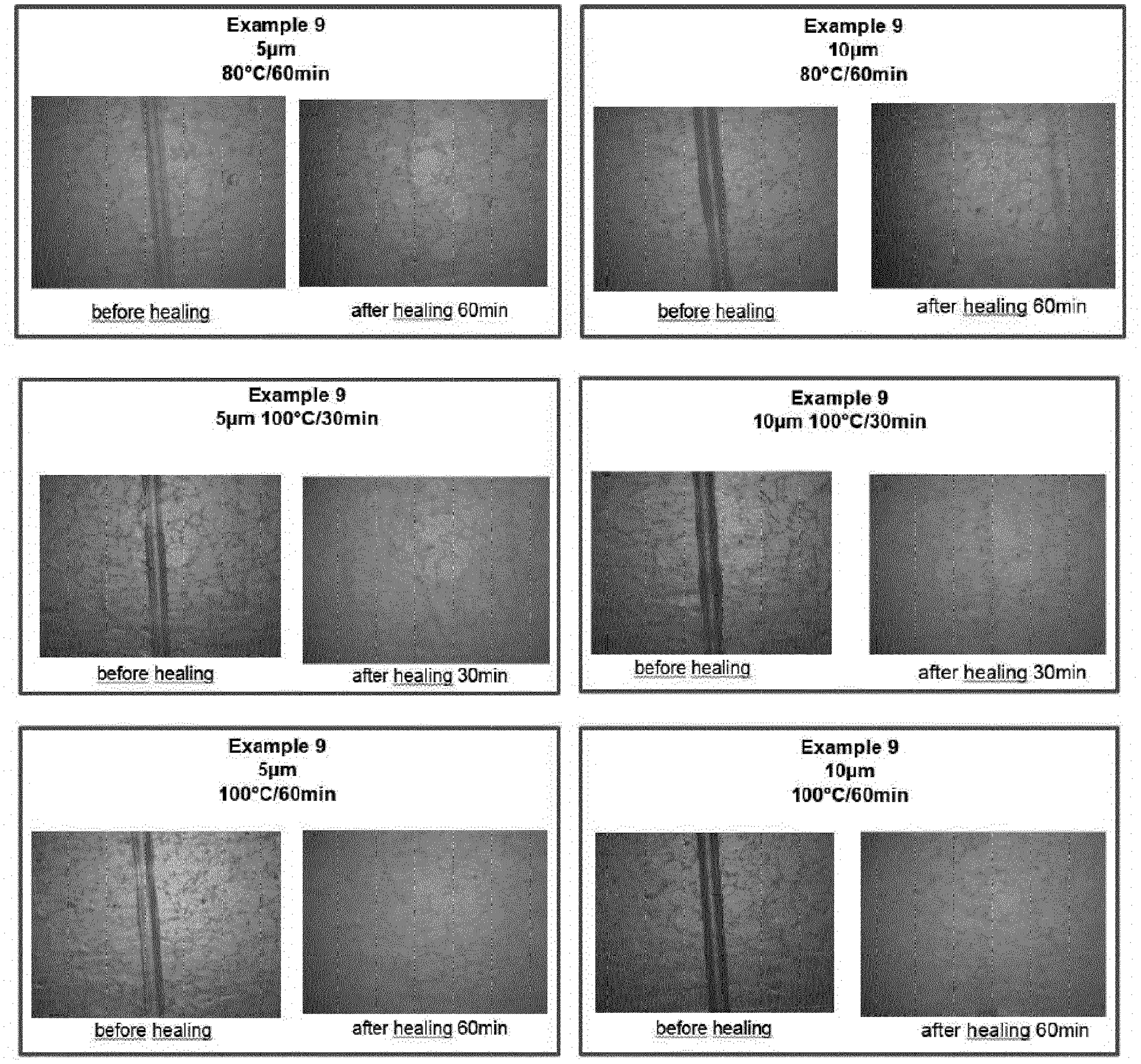
Example 9
5μm
80°C/60min
before healing
after healing 60min
Example 9
10μm
80°C/60min
before healing
after healing 60min
Example 9
5μm 100°C/30min
before healing
after healing 30min
Example 9
10μm 100°C/30min
before healing
after healing 30min
Example 9
5μm
100°C/60min
before healing
after healing 60min
Example 9
10μm
100°C/60min
before healing
after healing 60min

FIG 9

Europäisches Patentamt
European Patent Office
Office européen des brevets

# EUROPEAN SEARCH REPORT

Application Number
EP 17 16 6257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | CN 105 669 932 A (SUN YAT-SEN UNIV)<br>15 June 2016 (2016-06-15)<br>* paragraphs [0048] - [0058]; examples 5-10 *<br>----- | 1-8, 12-15<br>9-11 | INV.<br>C08G18/77<br>C08G18/79<br>C08G18/38<br>C08G18/42<br>C09D175/06<br>C08G18/72<br>C08G18/80 |
| Y | CN 105 802 195 A (SUN YAT-SEN UNIV)<br>27 July 2016 (2016-07-27)<br>* paragraph [0054]; example 10 *<br>----- | 9-11 | |
| A,D | WO 2015/127981 A1 (FUNDACIÓN CIDETEC [ES])<br>3 September 2015 (2015-09-03)<br>* page 29, lines 10-21; examples 1-5 *<br>----- | 1-15 | |
| | | | TECHNICAL FIELDS SEARCHED (IPC) |
| | | | C08G<br>C09D<br>B29C |

The present search report has been drawn up for all claims

2

| Place of search | Date of completion of the search | Examiner |
|---|---|---|
| Munich | 12 October 2017 | Lartigue, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 16 6257

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2017

| Patent document cited in search report | Publication date | Patent family member(s) | Publication date |
|---|---|---|---|
| CN 105669932 A | 15-06-2016 | NONE | |
| CN 105802195 A | 27-07-2016 | NONE | |
| WO 2015127981 A1 | 03-09-2015 | EP 3110877 A1 | 04-01-2017 |
| | | US 2017008999 A1 | 12-01-2017 |
| | | WO 2015127981 A1 | 03-09-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8460793 B2
- US 7723405 B2
- CN 105038502 A
- CN 103254736 A
- US 20150184304 A1
- WO 2010128007 A1
- WO 2015127981 A
- WO 2015127981 A1


### Non-patent literature cited in the description


- **SHEBA D. BERGMANA ; FRED WUDL.** Mendable polymers. *J. Mater. Chem.,* 2008, vol. 18, 41-62
- *Macromolecules,* 2011, vol. 44, 2536-2541
- *J. Mater. Chem.,* 2008, vol. 18, 41-62
- *Chem. Eur. J.,* 2007, vol. 13, 9542-9546
- *European Polymer Journal,* 2013, vol. 49, 1268-1286
- *Chem.Sci.,* 2011, vol. 2, 696-700
- *Progress in Organic Coatings,* 2009, vol. 64, 156-162
- **GUOQIANG LI.** Self-Healing Composites Shape Memory. *Book*
- *Mater. Horiz.,* 2014, vol. 1, 237-240
- *Polymer,* 2009, vol. 50, 4447-4454